# FASCICULE DE BREVET EUROPEEN

(11) **EP 2 135 851 B1**
(45) Date de publication et mention de la délivrance du brevet: **24.07.2013**
(21) Numéro de dépôt: 09305573.9
(22) Date de dépôt: 19.06.2009
(51) Int. Cl.: C04B 28/02, C09D 167/04

(54) **Utilisation d'un liant a base de biopolymere dans des applications routieres, pararoutieres ou liees au genie civil**
Verwendung eines Bindemittels auf Basis von Biopolymeren in Strassen- und Bauanwendungen
Use of a binder based on biopolymers in roadside and cilvil engineering applications

(30) Priorité: 20.06.2008 FR 0854109
(43) Date de publication de la demande: 23.12.2009
(73) Titulaire: COLAS, 92100 Boulogne-Billancourt (FR)
(72) Inventeur: Deneuvillers, Christine, 78310, MAUREPAS (FR)
(74) Mandataire: Michelet, Alain

(56) Documents cités:
- US-A1- 2005 026 999
- US-A1- 2005 123 744
- US-B1- 6 197 380

## Description

La présente invention concerne un procédé de réalisation d'une couche ou de revêtement de construction, des produits de marquage et/ou des produits d'étanchéité dans lequel on utilise un liant comprenant une résine à base de biopolymère en tant que liant non-bitumineux . L'invention concerne également les matériaux et produits incorporant ce liant.

Les liants utilisés dans la construction routière et pararoutière sont à base de bitume ou de latex acrylique, vinylique issus du pétrole et de la pétrochimie. Ces liants sont donc obtenus à partir de ressources d'origine fossiles.

Le bitume est utilisé dans des applications variées de par son pouvoir agglomérant. En effet, il adhère à la majorité des matériaux usuels tels que la pierre, le béton, le bois, les métaux et le verre. En outre, c'est un excellent isolant thermique et diélectrique.

Aujourd'hui de nombreuses chaussées, sinon la plupart, sont revêtues d'enrobés bitumineux qui ont fait la preuve de leur capacité à répondre aux contraintes de l'application d'une part et aux sollicitations liées au trafic et aux conditions climatiques d'autre part. Ces enrobés sont constitués par des granulats liés entre eux par du bitume ou du bitume modifié par ajout d'additifs, en particulier des élastomères et/ou des polymères thermoplastiques. Des granulats liés par du bitume sont également utilisés dans le Bâtiment et les Travaux Publics pour constituer entre autres des chapes d'étanchéité, des revêtements de trottoirs, des perrés, des revêtements d'ouvrage d'art. Le bitume est de plus utilisé dans des applications dites industrielles comme l'étanchéité, l'isolation thermique ou phonique.

Le bitume est une matière issue de la transformation du pétrole. À ce titre il fait partie des matières premières dites non renouvelables puisque le pétrole est une matière fossile.

Le risque d'épuisement des ressources pétrolières a généré un besoin de développer des nouveaux liants pouvant se substituer dans diverses applications aux liants bitumineux traditionnellement utilisés.

Le brevet des Etats-Unis US-5,021,476 décrit un liant pour la réalisation de pavement élastique de rue comprenant une huile de traitement minérale ou végétale, une résine d'origine végétale choisie parmi une résine de tall oil, une résine de bois, une résine de térébenthine ou un mélange de ces résines, un élastomère et un polymère thermoplastique. Les élastomères et polymères thermoplastiques cités sont issus de matière première pétrochimique. Ces liants ne sont donc-pas essentiellement à base de matière première renouvelable.

Il existe également des liants d'origine essentiellement végétale utilisés dans des applications routières. Le brevet EP 1466878 divulgue des liants d'origine naturelle réalisés à partir d'une résine végétale telle que la colophane ou ses dérivés et d'une huile d'origine végétale. Ces liants ont cependant pour inconvénient d'acquérir leur performance après un délai de mûrissement d'au moins plusieurs heures, c'est à dire après réaction des produits siccatifs avec l'oxygène de l'air.

Il existe donc un besoin de développer des liants non-bitumineux notamment à base de matière première renouvelable, susceptibles de se substituer dans diverses applications aux liants composés d'éléments non renouvelables tels que les liants bitumineux et/ou résines pétrochimiques, synthétiques ou semi-naturelles, traditionnellement utilisés.

On connaît également de l'art antérieur le document US2005/123744 qui décrit l'utilisation de matériaux polymères comprenant une résine à base de polyacide lactique comme revêtement de surface décoratif, tel que des revêtements de sol, plus particulièrement sous forme de feuille polymère.

Pour des raisons environnementales, ces liants doivent être de préférence biofragmentables, biodégradables et de faible écotoxicité. Ces produits doivent en outre être réalisés de préférence à partir de matières premières naturelles n'ayant pas d'équivalent de synthèse à un coût abordable.

Enfin, il existe également un besoin de développer des résines à base de matière première naturelle présentant des propriétés thermoplastiques notamment pour les applications routières. En effet, les résines thermoplastiques acquièrent leurs propriétés mécaniques dès refroidissement et ne présentent donc pas l'inconvénient de temps de mûrissement longs.

On entend par « matière première » et « composé d'origine naturelle » au sens de l'invention, tout produit extrait de la biomasse terrestre et marine renouvelable ou d'organismes vivants (animaux, micro-organismes), ou encore obtenus suite à l'action de micro-organismes vivants (par exemple enzymes ou bactéries) sur ces composés et matière première d'origine naturelle selon des procédés de bio-fermentation ou de bio-synthèse.

On entend par « thermoplastique », une matière plastique qui fond sous l'action de la chaleur ou, tout au moins, se ramollit suffisamment pour pouvoir être mise en forme un nombre infini de fois, sans modification de ses propriétés. Plus particulièrement, on entend par « propriété ou comportement thermoplastique » au sens de l'invention, une résine dont la viscosité diminue avec l'augmentation de la température, ce qui permet une manipulation aisée à une température élevée modérée, et qui recouvrent ses propriétés mécaniques aux températures d'usage.

Le demandeur a découvert que des résines d'origine exclusivement végétale présentant des propriétés thermoplastiques avantageuses peuvent être utilisées comme liant dans des matériaux pour la réalisation de couche ou de revêtement de construction, des produits de marquage et des produits d'étanchéité.

L'invention concerne donc un procédé de réalisation d'un revêtement de constructions, de produits d'étanchéité tel que défini dans le jeu de revendications dans lequel on utilise un liant. Le liant comprend au moins une résine à base de dérivés d'hydroxyacides polymérisés en tant que liant non bitumineux. La ou les résines sont choisies parmi :
a) les résines organiques dérivées d'une huile ou d'une graisse d'origine naturelle comprenant des monoglycérides et/ou des diglycérides, estérifiés par un poly(hydroxy acide) répondant à la formule suivante : 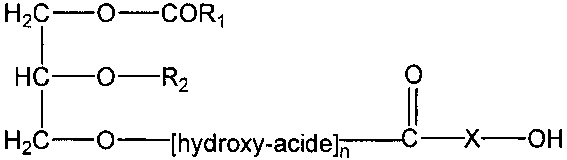 dans laquelle,
   - R₁ est une chaîne hydrocarbonée aliphatique comportant 6 à 32 atomes de carbone, saturée ou insaturée, éventuellement substituée par des groupements alkyles ou hydroxyles,
   - R₂ est un atome d'hydrogène, un groupe -COR₄ avec R₄ défini de la même façon que R₁ ou un groupe estérifié de poly(hydroxy acide),
   - le groupement poly(hydroxy acide) correspondant à [hydroxy acide]ₙ-CO-X-OH est une chaîne linéaire ou ramifiée, obtenue par condensation de monomères d'hydroxy acide semblables ou différents,
   - en fonction de la nature de l'hydroxy-acide, X = -CH₂, -CHR, R étant un groupe alkyle de 1 à 5 atomes de carbone et comportant 0 à 5 fonction(s) hydroxyle,
   - n représente le nombre de motifs d'hydroxy acide identiques ou différents et est compris entre 3 et 2000, et/ou
b) les résines organiques correspondant à des esters de polyacide lactique et de polyol tels que le glycérol, le 1,2 et 1,3 propane diol et/ou de polyacide mono ou polyhydroxylé tels que l'acide malique, l'acide citrique, l'acide tartrique ou leurs esters, de préférence du glycérol ou de l'acide citrique, et/ou
c) les résines organiques à base de polyacide lactique ou de dérivés de polyacide lactique tels que les esters correspondants, et
   - un granulat comprenant des granulats fins de granulométrie comprise entre 0 et 80 µm et des gros granulats choisis parmi le sable, les gravillons et/ou les graves.

L'invention concerne également un matériau pour la réalisation de couches et/ou revêtements de construction de type enrobé ou enduit superficiel comprenant un mélange :
a) d'un granulat comprenant des granulats fins de granulométrie comprise entre 0 et 80 µm et des gros granulats choisis parmi le sable, les gravillons et/ou les graves; et
b) d'un liant tel que défini précédemment.

L'invention concerne encore une couche ou revêtement de construction, constitué(e) dudit matériau. La couche ou revêtement de construction constitue une couche ou revêtement de construction routière ou de génie civil.

L'invention concerne encore un produit de marquage routier comprenant en, poids par rapport au poids total du produit de marquage :
- 10 à 50 % d'un liant tel que défini ci-dessus,
- 1 à 40 % de pigments, et
- 20 à 60 % de charges.

L'invention concerne encore un produit d'étanchéité tel qu'une membrane, géomembrane et/ou feuille d'étanchéité comprenant un liant tel que défini ci-dessus. Plus particulièrement, le produit d'étanchéité comprend un textile imprégné d'un milieu liant comprenant :
- le liant tel que défini précédemment, et
- des charges de type filler calcaire.

L'invention consiste donc à utiliser des matériaux d'origine naturelle en substitut du bitume et de tout liant d'origine pétrochimiques dans toutes leurs applications liées à la route ou au génie civil : les enrobés à chaud, les émulsions de bitume, les enduits superficiels, les couches d'accrochages, les produits d'étanchéité, les produit de marquage tels que les peintures permanentes ou provisoires, les enduits épais de marquage routier.

Ces produits peuvent être utilisés pour la réalisation de matériaux pour le bâtiment et les travaux publics, et en particulier des matériaux pour confectionner des couches et/ou revêtements de construction routière et/ou de génie civil notamment pour la construction et la réparation de routes, autoroutes, pistes d'aérodrome, sols industriels, sportifs ou piétonniers, les aménagements de voierie et réseaux divers, les réseaux de voie ferrée ; des matériaux pour la mise en place des équipements de la route tels que la signalisation ; des matériaux pour la construction de bâtiments industriels notamment pour assurer l'étanchéité et l'isolation des bâtiments industriels, la protection et le bardage des ouvrages de génie civil et des bâtiments industriels, les murs anti-bruit et tous aménagements de sécurité ainsi que la production de tous matériaux en relation avec ces domaines.

Le liant selon l'invention comprend des résines qui sont de préférence essentiellement d'origine naturelle, de préférence d'origine végétale. Selon l'invention, on entend par « essentiellement d'origine naturelle », une résine qui comporte, par rapport au poids total de la résine, au moins 95%, de préférence au moins 99% et mieux encore 100% en poids de composés d'origine naturelle.

Les liants selon l'invention peuvent comprendre une ou plusieurs résines. Le couplage de résines différentes et la nature des composants utilisés permettent d'obtenir des liants dont les caractéristiques répondent à une gamme infinie de performances.

Bien que cela ne soit pas recommandé pour les raisons environnementales mentionnées précédemment, on peut cependant utiliser pour la formulation du liant selon l'invention d'autres résines n'étant pas exclusivement d'origine naturelle. Le liant peut donc comprendre en outre une résine organique d) obtenue par réaction de glycérol, de triglycérides issus d'huile végétale ou animale et d'au moins un diacide tel que l'acide maléique, l'acide phtalique, l'acide iso et téréphtalique, l'acide succinique, l'acide fumarique, l'acide adipique, l'acide subérique, l'acide sébacique, l'acide azélaïque ou un ester ou anhydride correspondant.

De manière particulièrement préférée, le liant selon l'invention est exempt de tout produit non renouvelable tel que du bitume ou des élastomère synthétique, tel que par exemple le polybutadiène, le caoutchouc styrène-butadiène (SBR), le styrène-butadiène-styrène (SBS), l'éthylène-acétate de vinyle (EVA), etc, et de tout polymère thermoplastique synthétique tel que, par exemple, les polyoléfines (polyéthylène, polypropylène), et les polyamides.

La résine a) selon l'invention est dérivée d'une huile ou d'une graisse d'origine naturelle en ce sens qu'elle est obtenue à partir de monoglycéride ou de diglycéride. Ces monoglycérides et diglycérides sont eux mêmes obtenus à partir de triglycéride qui est le constituant principal des huiles végétales et des graisses animales. En effet, les huiles végétales sont des huiles à forte teneur en triglycérides ou essentiellement constituées de triglycérides d'esters d'acide(s) gras et de glycérol dont les acides gras peuvent être saturés ou insaturés, linéaires ou ramifiés, comportant de 6 à 32 atomes de carbone et éventuellement 0 à 10 insaturations et 0 à 5 fonctions hydroxyle (-OH).

Parmi les huiles végétales convenant à l'invention, on peut citer les huiles de colza oléique et érucique, l'huile de lin, l'huile de tournesol, l'huile de ricin, l'huile de soja, l'huile de palme, l'huile de palmiste, l'huile de coprah, l'huile de maïs, l'huile de coton, l'huile de arachide, l'huile de son de riz, l'huile d'olive, l'huile de tung, l'huile de pourghère *(Jatropha curcas*). L'huile de pourghère extraites des graines mûres de *Jatropha curcas* est une huile liquide à température ambiante, de type insaturée et avec une prédominance des acides gras oléique (43-53 %), linoléique (20-32 %) et palmitique (13-15 %). D'autres sources de triglycérides naturels sont aussi utilisables telles que les huiles de poisson, de micro et macro-algues, de suif et de tall-oil.

De façon préférée, on choisira plutôt les huiles présentant des acides gras comportant entre 12 et 20 atomes de carbone et plus idéalement riches en C18 tels que l'acide oléique, linoléique ou linolénique.

Les hydroxy acides sont des acides organiques qui se définissent par la présence d'au moins une fonction hydroxyle (-OH) et d'au moins une fonction carboxylique (-COOH). Les hydroxy-acides naturels selon l'invention peuvent comporter 1 à 5 fonctions acides et 1 à 6 fonctions hydroxyles situées en position alpha, béta, gamma et delta de la fonction acide. Les α-hydroxyacides portent la fonction hydroxyle sur le carbone adjacent à la fonction acide carboxylique (soit en position 1 de la fonction acide), alors que les β-hydroxyacides portent la fonction hydroxyle sur le deuxième carbone adjacent à la fonction acide carboxylique (soit en position 2 de la fonction acide).

Parmi les hydroxy acides naturels convenant à l'invention, on peut citer l'acide lactique (sous forme D, L et racémique), l'acide citrique, l'acide malique, l'acide tartrique, l'acide glycolique, l'acide salicylique et l'acide β -hydroxybutyrique. On utilise de préférence l'acide lactique, citrique et malique. On peut également utiliser les lactones ou dilactones correspondantes (par exemple lactide). L'acide lactique peut être issu des plantes ou du lait. Les polyhydroxyacides greffés appartiennent donc au groupe constitué par le polylactate, le polymalate, le polyglycolate, le polycitrate issus de la condensation des hydroxy acides naturels correspondant.

La masse molaire moyenne d'une chaîne de poly(hydroxy acide) estérifiée correspondant au groupement [hydroxy acide]ₙ-CO-X-OH est de préférence comprise entre 350 et 100 000 g.mol⁻¹, de préférence entre 350 et 20 000 g.mol⁻¹.

La résine a) selon l'invention est donc essentiellement d'origine naturelle car elle est obtenue à partir de dérivés d'une huile ou d'une graisse d'origine naturelle et d'hydroxy acides naturels.

La résine a) est obtenue par réaction d'au moins un hydroxy acide ou d'un ester d'hydroxy acide en excès, ou d'un poly(hydroxy acide) déjà formé, et d'un mono et/ou un diglycéride. Cette étape est réalisée en présence d'un catalyseur choisi dans le groupe constitué par les sels organiques d'étain, de fer, de zinc, d'aluminium, les acides minéraux ou organiques, les catalyseurs basiques, de préférence, le catalyseur est l'éthylhexanoate d'étain (SnOct₂). La réaction est réalisée à une température comprise entre 100 et 220°C, de préférence entre 140 et 200°C, et dure de 5 et 12 heures, de préférence environ 9 heures.

Selon un autre procédé, on peut utiliser les esters correspondants de ces acides hydroxylés (par exemple, le lactate d'éthyle) en vue de produire par transestérification les produits de la famille a) visée par l'invention.

Lorsque la réaction est réalisée avec un poly(hydroxy acide) déjà formé cela signifie que la condensation de l'hydroxy-acide a été réalisée de façon isolée et que l'on fait ensuite réagir dans une seconde étape le polyester formé sur le mélange de monoglycérides et de diglycérides préalablement préparé.

La résine a) est de préférence obtenue par réaction de 1 à 30 % en poids, de préférence 1 à 20 % en poids de monoglycéride et/ou de diglycéride avec 70 à 99 % en poids, de préférence 80 à 98 % en poids par rapport au poids total de la résine, d'hydroxy acide ou d'un poly(hydroxy acide) déjà formé.

Le rapport molaire [hydroxy-acide]/[nombre de fonctions acide + hydroxyle] est compris entre 3 et 1000, de préférence compris entre 5 et 500, et mieux encore 5 et 120. L'expression « [nombre de fonctions acide + hydroxyle] » correspond en mole au nombre de fonctions réactives totales présentes :
- sur les monoglycérides, dans ce cas, il reste deux fonctions hydroxyles susceptibles de réagir par monoglycéride, ou sur les diglycérides, dans ce cas, il reste une fonction hydroxyle susceptible de réagir par diglycéride,
- sur les chaînes d'ester d'acide gras qui peuvent comporter un ou plusieurs groupements hydroxyles.

C'est en choisissant ce rapport molaire que l'on détermine la longueur moyenne des chaînes de polyacide qui seront greffées sur chaque fonction réactive du monoglycéride ou du diglycéride.

Les résines a) selon l'invention correspondent soit :
- à des monoglycérides mono-estérifiés par un hydroxy acide polymérisé,
- à des monoglycérides di-estérifiés par un hydroxy acide polymérisé, ou
- à des diglycérides estérifiés par un hydroxy acide polymérisé.

Le monoglycéride et/ou le diglycéride a été obtenu au préalable soit par glycérolyse des triglycérides, ou par estérification du glycérol par les acides gras.

Lorsque le monoglycéride et/ou le diglycéride est obtenu par glycérolyse des triglycérides, le rapport molaire glycérol/huile est compris entre 0,5 et 5. Pour obtenir un mélange riche en diglycéride, on choisit un rapport molaire glycérol/huile compris entre 0,9 et 1,1. Pour obtenir un mélange riche en monoglycéride, on choisit un rapport molaire glycérol/huile compris entre 1,9 et 2,1.

Le glycérol utilisé est de préférence d'origine végétale ou animale.

La résine b) de l'invention est obtenue par réaction de l'acide lactique avec des polyols tels que le glycérol, le 1,2 et 1,3 propane diol et/ou des polyacides mono ou polyhydroxylés tels que l'acide malique, l'acide citrique, l'acide tartrique ou leurs esters, de préférence le glycérol ou l'acide citrique. Les résines b) de l'invention correspondent donc à des esters de polyacide lactique et de polyol et/ou de polyacide mono ou polyhydroxylé.

Les polyacides mono ou polyhydroxylés correspondent à des composés présentant au moins deux fonctions acide carboxylique et une fonction hydroxyle dans le cas d'un polyacide monohydroxylé et au moins deux fonctions hydroxyles dans le cas d'un polyacide polyhydroxylé. Des esters de polyacides mono ou polyhydroxylé peuvent servir de matière première alternative en vue de produire par transestérification les produits de la famille b) visée par l'invention.

La résine b) selon l'invention est donc essentiellement d'origine naturelle car elle est obtenue à partir d'acide lactique et de polyols et/ou de polyacides mono ou polyhydroxylés d'origine naturelle.

Les paramètres du procédé d'obtention de la résine b), c'est-à-dire la température et le temps de réaction ainsi que le choix des catalyseurs, sont identiques à ceux de l'étape de polymérisation et greffage de la chaîne de polyhydroxyacide de la résine a).

Cette étape est en général réalisée par réaction de 5 à 20 % en poids, de préférence environ 10 à 15 % en poids de polyol et/ou de polyacide mono ou polyhydroxylé avec 80 à 95 % en poids, de préférence 85 à 90 % en poids par rapport au poids total de la résine, d'acide lactique.

Le rapport molaire [hydroxy-acide]/[nombre de fonctions acide + hydroxyle] est compris entre 3 et 15. L'expression « [nombre de fonctions acide + hydroxyle] » dans le cas de la résine b) correspond en mole au nombre de fonctions réactives totales apportées par :
- le polyol, soit 3 par exemple pour le glycérol,
- le polyacide mono ou polyhydroxylé, soit 4 par exemple pour l'acide citrique.

C'est en choisissant ce rapport molaire que l'on détermine la longueur moyenne des chaînes de polyacide qui seront greffées sur chaque fonction réactive du polyol et/ou du polyacide mono ou polyhydroxylé.

La résine c) correspond au polyacide lactique ou ses dérivés (PLA ou polylactide). Ces résines sont connues et répondent notamment au numéro de CAS 9051-89-2. Ces résines ont de préférence les caractéristiques suivantes :
- densité comprise d'environ 1,24,
- plage de température de fusion comprise entre 150 et 180°C,
- température de transition vitreuse comprise entre 55 et 65°C.

La résine d) correspond aux résines issues de la réaction du glycérol avec des triglycérides (huiles végétales ou animales) et des diacides, de préférence des anhydrides d'acide. Les huiles végétales peuvent être choisies parmi les huiles décrites pour les résines a). Les diacides ou anhydrides d'acides correspondants peuvent être choisis parmi l'acide maléique, phtalique, iso et téréphtalique, succinique, fumarique, adipique, succinique, subérique, sébacique, azélaïque. On peut également utiliser les esters de ces diacides en vue de produire par transestérification les produits de la famille d) visée par l'invention.

De préférence, la résine d) est obtenue par réaction de mono ou diglycéride avec des diacides ou anhydride phtalique. Cette étape est réalisée à environ 150°C pendant 5,5 h. La résine d) correspond donc au produit d'estérification de mono et de diglycérides par des diacides. La résine d) est de préférence obtenue selon un rapport molaire [fonctions acides]/[fonctions alcools] d'environ 1. Les mono et/ou diglycérides sont obtenus de la façon décrite dans la partie concernant la résine a).

Lorsque les liants de l'invention comprennent plusieurs résines différentes, ils sont obtenus par simple mélange des résines sous agitation, à une température et pendant des durées suffisantes pour permettre d'obtenir un liant homogène. La température est en général de l'ordre de 120°C.

Selon un mode de réalisation de l'invention, le liant comprend une résine a) ou/et une résine b). De préférence, lorsque le liant comprend un mélange des résines a) et b), le rapport pondéral de la résine a) par rapport à la résine b) est compris entre 10/90 et 90/10.

Enfin, lorsque le liant comprend la résine c), la résine c) représente en poids par rapport au poids total de résine dans le liant, 10 à 90% en poids, de préférence 10 à 40% en poids et mieux encore environ 20% en poids.

Selon un autre mode de réalisation de l'invention, le liant comprend une résine c) et une résine d). De préférence, lorsque le liant comprend un mélange des résines c) et d), le rapport pondéral de la résine c) par rapport à la résine d) est compris entre 10/90 et 90/10, de préférence 20/80 et 80/20.

Le liant selon l'invention peut également comprendre un ou plusieurs agents colorants tels que des pigments minéraux et des colorants organiques.

Le liant selon l'invention peut être utilisé pour la réalisation de matériaux pour le bâtiment et les travaux publics, en particulier des matériaux pour confectionner des couches et/ou revêtements de construction routière et/ou de génie civil. Ainsi, le liant selon l'invention peut être utilisé pour lier des granulats entre eux et éventuellement les coller sur le support sur lequel ils sont répandus ou faciliter leur adhérence.

Le terme granulat correspond à un matériaux granulaire utilisé dans la construction notamment aux matériaux décrits dans la norme XP P 18-545. Les agrégats, au sens de XP P 98-135, sont également susceptibles d'être utilisés en combinaison avec le liant selon l'invention. Les granulats comprennent les fines, fillers (charges), sables, gravillons et graves. Pour caractériser les enrobés, on utilise en particulier la description de leur formule granulaire, c'est-à-dire la répartition de la masse des granulats qui entrent dans la composition de l'enrobé en fonction de la classe granulaire.

Le liant peut être mélangé aux granulats avant application pour former des enrobés (technique d'enrobage) à chaud ou à froid, ou répandu sur la chaussée avant ou après le répandage des granulats pour former les couches ou revêtements.

L'invention concerne donc un matériau pour la réalisation de couches et/ou revêtements de construction comprenant un mélange d'un granulat ; et d'un liant selon l'invention. De préférence, ledit matériau comprend en poids par rapport au poids total dudit matériau:
a) 85 à 97 % de granulat ; et
b) 3% à 15 % de liant.

Les granulats comprennent des granulats fins de granulométrie comprise entre 0 et 80 µm (fines et/ou fillers) et des gros granulats choisis parmi le sable, les gravillons et/ou les graves. La granulométrie des gros granulats peut aller jusqu'à 80 mm. Le matériau peut être un enrobé ou un enduit superficiel. Ce matériaux est donc utilisé pour fabriquer des couches ou revêtement de construction.

Ces couches ou revêtements sont formées in situ, c'est-à-dire que la couche ou le revêtement est formé directement sur le support destiné à être recouvert. Par exemple, dans le cas de revêtement routier, le support sera la chaussée. Les couches ou revêtement ainsi formés peuvent être continues. Les couches ou revêtements sont de préférence utilisés en extérieur.

L'invention concerne donc également une couche ou revêtement de construction susceptible d'être obtenu(e) in situ par application sur la chaussée d'un mélange de liant tel que défini ci-dessus et de granulats ou par répandage sur la chaussée dudit liant avant ou après le répandage des granulats. Ces couches ou revêtements de construction constituent de préférence une couche ou revêtement de construction routière ou de génie civil.

En ce qui concerne les enrobés bitumineux, les évolutions de la technique ont permis de sélectionner des formules granulaires plus aptes que d'autres à satisfaire des spécifications de performances. Par performances on entend les propriétés des enrobés telles qu'ont peut les caractériser à l'aide des essais suivants :

| **Performance** | **Norme d'essais** | **Commentaires** |
|---|---|---|
| Compactabilité | NF P98-252 | Capacité de l'enrobé à être mis en place avec une compacité spécifiée |
| Résistance mécanique et tenue à l'eau | NF P98-251-1 | Durabilité face aux agressions du trafic et aux risques de désenrobage |
| Résistance à l'orniérage | NF P98-253-1 | Capacité à résister au fluage lié à l'application du trafic |
| Module complexe | NF P98-260-2 | Capacité à supporter les efforts. |
| Comportement en fatigue | NF P98-261-1 | Capacité à maintenir intactes les propriétés de l'enrobé en fonction de la répétition de l'application des charges |

Les spécifications des bitumes sont données dans la norme NF EN 12591. Ils sont en général caractérisés par une pénétrabilité, mesurée selon la norme NF EN 1426 et exprimée en dixième de millimètre, par la température de ramollissement, exprimée en degré centigrade et mesurée selon la norme NF EN 1427, ou par leur viscosité. En fonction de l'usage visé, le bitume est choisi dans une des classes définies dans la norme NF EN 12591.

C'est pourquoi lorsque le liant est utilisé dans des applications routières, il est caractérisé par les mêmes paramètres, mesurés selon les mêmes méthodes, exprimés selon les mêmes unités.

Le liant selon l'invention peut être utilisé selon l'application, tel quel (sans solvant), fluxé (c'est-à-dire additivé d'un solvant) ou sous forme d'une émulsion aqueuse.

Dans le cas des émulsions, on peut utiliser tout émulsifiant classique, cationique, anionique ou non ionique ou des mélanges d'émulsifiants.

Le bitume peut être mis en émulsion afin d'en faciliter l'usage dans des procédés aussi divers que :
- les enduits superficiels, les couches d'accrochage, les enrobés coulé à froid, les couches de cure, l'imprégnation, le traitement des sols et des graves, les graves d'émulsion, les enrobés à l'émulsion, les enrobés coulés à froid et d'une manière générale les procédés tels que décrits dans l'ouvrage « Les émulsions de bitume » édités par le syndicat français des émulsions routières de bitume (SFERB).
- les couches de protection de pipe-lines, d'ouvrage métalliques, d'ouvrage en béton, liant entrant dans la fabrication de panneaux d'isolation thermiques et phoniques à base de particules de bois ou de matériaux polymères et d'une manière générale les usages décrits dans « The Shell Bitumen Industrial Handbook » publié par Shell Bitumen en 1995, ISBN 0-9516625-1-1.

Le liant selon l'invention peut sans difficultés être mis en émulsion avec les émulsifiants classiquement utilisés pour l'émulsification des bitumes. Ces émulsifiants, ou mélanges d'émulsifiant, qui peuvent être cationiques, anioniques ou non-ioniques, sont bien connus de l'homme de l'art.

La formule de l'émulsion est choisie en fonction de l'application visée. Cette émulsion de liant selon l'invention peut alors remplacer les émulsions de bitume dans leurs applications.

La quantité de liant utilisée pour la fabrication de couche ou revêtement correspond à celle de bitume classiquement utilisée pour la même application. Ainsi, lorsque le liant est utilisé pour fabriquer des enrobés, les enrobés comprennent de préférence 3 à 15 % en poids de liant par rapport au poids total de l'enrobé. Les granulats constituent de préférence 85 à 97 % en poids du poids total de l'enrobé.

L'invention concerne encore un produit de marquage routier comprenant :
- 10 à 50 %, de préférence 30 à 40 % de liant,
- 1 à 40 %, de préférence 5 et 25 % de pigments, et
- 20 à 60 %, de préférence 35 à 45 % de charges.

Lorsque le liant est utilisé en tant que liant pour produit de marquage, il est de préférence sous forme d'émulsion en phase aqueuse ou en phase solvant, de préférence en phase aqueuse. Le liant sous forme d'émulsion comprend, 30 à 70 % d'extrait sec en poids par rapport au poids total du liant. Le produit de marquage peut comprendre outre les solvants apportés par le liant de base organique, un ou plusieurs solvants pouvant être différents ou identiques à ceux du liant de base organique.

Le liant comporte donc le liant organique proprement dit ou résine et un solvant pouvant être de l'eau. Par conséquent, les produits de marquage de l'invention comprennent 5 à 20 % en poids de résine organique par rapport au poids total du produit de marquage.

Les charges permettent d'adapter certaines caractéristiques mécaniques, chimiques, électriques ou rhéologiques. On utilise de préférence des charges d'origine minérale. Les charges les plus utilisées sont les sulfates, les silicates, les carbonates tels que le carbonate de calcium (CaCO₃) et la dolomie (CaCO₃, MgCO₃), les oxydes tels que la silice (SiO₂) amorphe ou cristallisée. On peut également utiliser à titre de charge des laminaires ou des fibres.

De préférence, les produits de marquage en phase solvant contiennent de préférence des solvants issus des ressources renouvelables d'origine végétale ou animale tels que le Vegeflux® et le bioéthanol.

Les produits de marquages peuvent comprendre en outre un ou plusieurs additifs choisis parmi les agents de coalescence, les agents antimousses, les épaississants, les surfactants et les dispersants.

De préférence, les produits de marquage sont des peintures routières aqueuses ou solvantées, permanentes ou provisoires, des enduits à froid ou à chaud, des bandes préformées. Un produit de marquage routier de type peinture routière comprend de préférence outre ladite composition, des billes de verre et/ou des matériaux antidérapants pouvant être incorporés en prémix ou en saupoudrage.

L'invention concerne également des produits d'étanchéités de type membranes, géomembranes, feuilles d'étanchéité. En effet, les membranes et géomembranes bitumineuse sont utilisées dans le domaine du génie civil comme barrière d'étanchéité. Les géomembranes bitumineuses sont fabriquées à base d'un textile dit géotextile imprégné de bitume. Le géotextile est tissé ou non tissé en polyéthylène, polypropylène, polyamide ou polyester ou encore en un mélange de ces produits. On peut citer à titre d'exemple le Colétanche® produit par Axter.

Ces géomembranes bitumineuses permettent d'assurer l'étanchéité de la structure dans laquelle elles sont employées. Elles sont adaptées pour traiter les problèmes d'environnement :
- confinement de décharges,
- stockage de liquides pollués et de lixiviats,
- stockage de déchets divers et notamment radioactifs,
- protection des nappes phréatiques.

Elles sont également employées dans la construction d'ouvrages hydrauliques comme des barrages, bassins et canaux.

Le bitume entre également dans la composition de feuilles d'étanchéité. On peut prendre comme exemple les produits Alpal® ou Hyrène® de la société Axter. Ces feuilles d'étanchéité sont utilisées en :
- étanchéité pour les toitures terrasses (inaccessibles autoprotégées ou sous gravillons, toitures-terrasse jardins, piétonnes, privatives ...),
- étanchéité des parois enterrées,
- étanchéité pour le Géni Civil,
- couverture pour les bâtiments (habitation ou industriels).

Les produits d'étanchéité de type membrane ou géomembrane comprennent un textile imprégné d'un milieu liant comprenant :
- le liant tel que défini ci-dessus,
- des charges de type filler calcaire.

De préférence, ce milieu liant comporte 10 à 30 % de charges.

Le liant selon l'invention peut remplacer le bitume sans aucune difficulté technique. La composition du liant selon l'invention est ajustée en fonction des caractéristiques du bitume auquel il se substitue.

Dans les exemples qui suivent, sauf indication contraire, toutes les parties et pourcentages sont exprimés en poids.

### EXEMPLE

### 1. Réalisation des résines selon l'invention

### 1.1 Résines a)

- **Composants :**: Triglycéride de ricin ou de colza ou de lin
Glycérol
NaOH (catalyseur)
Acide lactique
Sn₂Octanoate (catalyseur)

**Principe de fabrication :** Dans un premier temps, on fait réagir les triglycérides provenant de l'huile végétale avec du glycérol selon un rapport molaire [glycérol]/[huile] de 2. Cette étape est réalisée dans un réacteur en verre équipé d'une agitation mécanique à 220°C pendant 2 heures. Les composants sont mélangés avec de la soude comme catalyseur. La transformation totale des triglycérides est contrôlée par HPLC. En fin de réaction, le mélange est refroidi lentement. Par conséquent, suite à cette étape on obtient un mélange riche en monoglycéride. Puis dans une seconde étape, dans un réacteur en verre équipé d'une agitation mécanique et d'un Dean-Stark, on fait réagir le mélange riche en monoglycéride pendant 9 heures à 150°C en présence d'acide lactique et de Sn₂Octanoate en tant que catalyseur. Le rapport molaire [acide lactique]/[fonctions acide + hydroxyle] est de 12,5.

### Exemple de résine a) :

A1 : 15 % d'un mélange riche en monoglycéride (Huile lin (80%) et Glycérol (20%)) et 85% d'acide lactique
A2 : 15% d'un mélange riche en monoglycéride (Colza (80%) et glycérol (20%)) et 85% d'acide lactique
A3 : mélange de mono et diglycérides obtenu à partie d'huile de ricin + acide lactique, les mono et diglycérides sont présents selon un rapport massique mono/diglycéride = 60/40, le rapport molaire acide lactique/(mono et diglycérides) est de 25/1.

### 1.2 Résine b)

- **Composants :**: Glycérol
Acide citrique
Acide lactique
Sn₂Octanoate (catalyseur).

**Principe de fabrication :** On fait réagir du glycérol ou de l'acide citrique avec de l'acide lactique selon un rapport molaire [acide lactique]/[fonctions acide + hydroxyle] compris entre 5 et 18 pendant 9 heures à 150°C en présence de Sn₂Octanoate comme catalyseur.

### Exemple de résine b) :

B1 : 10% Glycérol et 90 % Acide lactique
B2 : 15% Acide citrique et 85% Acide lactique

### 1.3 Résine c)

L'acide polylactique utilisé dans ces essais est un produit disponible dans le commerce notamment sous la référence NatureWorks 8302D commercialisé par la société NatureWorks LLC.

### 1.4 Résine d)

- **Composants :**: Triglycéride de ricin ou de colza ou de lin
Glycérol
NaOH (catalyseur)
Anhydride phtalique

**Principe de fabrication :** Dans un premier temps, on fait réagir les triglycérides (ou huile) avec du glycérol selon un rapport molaire [glycérol]/[huile] de 2. Cette étape est réalisée à 220°C pendant 2 heures. Suite à cette étape on obtient un mélange riche en monoglycéride. Puis dans une seconde étape, on fait réagir le mélange riche en monoglycéride en présence d'anhydride phtalique pendant 5,5 heures à 220°C. Le rapport molaire [fonction acide]/[fonctions alcool] est de 1.

### Exemple de résine d) :

D1 : 40 % Mélange mono et diglycéride (75% lin et 25% glycérol) et 60% Anhydride phtalique

### 2. Exemples de formulations de liants selon l'invention

| Liants | Dosages | Famille | Pen EN1426 | TBA EN1427 |
|---|---|---|---|---|
| A1 / B1 | 50 % / 50 % | A + B | 33 1/10 mm | 37°C |
| D / C1 | 80 % / 20 % | D + C | 0.1 1/10 mm | 80°C |
| A2 / B2 | 50 % / 50 % | A + B | 14 1/10 mm | 49°C |
| A3/ D | 80 % / 20 % | A + D | - | - |

Pen EN1426 correspond à la pénétrabilité mesurée selon la norme EN1426. TBA EN1427 correspond à la température bille-anneau mesurée selon la norme EN1427. On constate donc que les résines obtenues ont bien une pénétrabilité et une température bille-anneau tombant dans les gammes de valeur traditionnelles des liants bitumineux.

### 3. Exemples d'utilisation des liants selon l'invention

### 3.1. Utilisation en enrobés

Un enrobé de type béton bitumineux très mince (BBTM) a été confectionné à partir de granulats « La Noubleau » produits par les carrières Roy. La formule granulaire était la suivante :

| Granulats | % |
|---|---|
| 6/10 Noubleau | 34 |
| 2/6 Noubleau | 34 |
| 0/2 Noubleau | 30 |
| Filler Picketty | 2 |

Le liant réalisé à partir du mélange A2-B2 50/50 selon l'invention a été incorporé dans cette formule granulaire à raison de 5,6 % en poids par rapport au poids total de liant et de granulats.

Cet enrobé a obtenu les caractéristiques suivantes :
Contrainte Duriez : 14,9 MPa
Orniérage : 6,5% après 27 000 cycles

La Contrainte Duriez correspond à la résistance à la compression Duriez selon la norme NF P98-251-1. La résistance à l'orniérage est mesurée selon la norme NF P98-253-1.

La contrainte Duriez de cet enrobé comprenant un liant dont la pénétrabilité est de 14 1/10 mm est équivalente à celle obtenue avec un bitume 10/20 de même formule. En outre, concernant l'orniérage la norme prévoit un orniérage à 3000 cycles < 15% pour les classes 2.

Par conséquent, on constate que les liants incorporant les résines de l'invention sont de façon surprenante, en terme de performance, équivalents aux liants bitumineux traditionnellement utilisés.

### 3.2. Utilisation en produit de marquage

Une peinture routière aqueuse a été réalisée avec les constituants suivants.

| Famille | Matière Première | Dosage Massique |
|---|---|---|
| Emulsion | - 60% liant A3/D | |
| | - 0,3% Radiasurf 7404 | 26,1% |
| | - qsp 100 % eau | |
| Charges | Durcal 15 | 41,5% |
| Pigments | Lithopone | 18 % |
| Additifs | Dispersant | 2,4% |
| | Epaississant | |
| Eau | | 12% |

Le produit Radiasurf 7404 est un émulsifiant commercialisé par la société OLEON. Le Durcal 15 sont des charges de carbonate de calcium commercialisé par la société OMYA. Le lithopone est un pigment blanc à base de sulfate de baryte, de sulfure de zinc et d'oxyde de zinc.

Cette peinture présente les caractéristiques suivantes :
Extrait sec (Norme NF EN ISO 3251): 78,3 %
Teneur en cendres (norme NF T 30-012) : 42,4%
Temps de séchage à 20°C/50% hygrométrie (NF L16116) : 35 minutes
Dureté de Persoz à J+7 (NF EN ISO 1522) : 37 secondes
Coordonnées chromatiques (EN 1436) : Y=93 ; x= 0,318 ; y=0,328
Viscosité de Brookfield R4V10 (ISO 2555) : 3800 mPa.s

On constate qu'une peinture formulée avec le liant de l'invention présente des caractéristiques équivalentes aux peintures traditionnellement utilisées.

## Revendications

1. Procédé de réalisation d'un revêtement de construction, de produits de marquage et de produits d'étanchéité dans lequel on utilise :
- un liant comprenant au moins une résine à base de dérivés d'hydroxyacides polymérisés en tant que liant non bitumineux, **caractérisée en ce que** la ou les résines sont choisies parmi :
a) les résines organiques dérivées d'une huile ou d'une graisse d'origine naturelle comprenant des monoglycérides et/ou des diglycérides, estérifiés par un poly(hydroxy acide) répondant à la formule suivante : 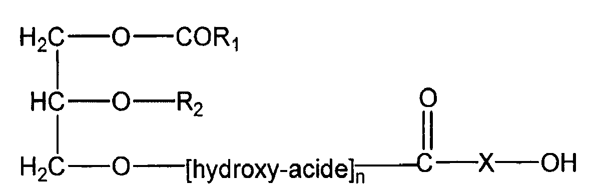 dans laquelle,
- R₁ est une chaîne hydrocarbonée aliphatique comportant 6 à 32 atomes de carbone, saturée ou insaturée, éventuellement substituée par des groupements alkyles ou hydroxyles,
- R₂ est un atome d'hydrogène, un groupe -COR₄ avec R₄ défini de la même façon que R₁ ou un groupe estérifié de poly(hydroxy acide),
- le groupement poly(hydroxy acide) correspondant à [hydroxy acide]ₙ-CO-X-OH est une chaîne linéaire ou ramifiée, obtenue par condensation de monomères d'hydroxy acide semblables ou différents,
- en fonction de la nature de l'hydroxy-acide, X = -CH₂, -CHR, R étant un groupe alkyle de 1 à 5 atomes de carbone et comportant 0 à 5 fonction(s) hydroxyle,
- n représente le nombre de motifs d'hydroxy acide identiques ou différents et est compris entre 3 et 2000, et/ou
b) les résines organiques correspondant à des esters de polyacide lactique et de polyol tels que le glycérol, le 1,2 et 1,3 propane diol et/ou de polyacide mono ou polyhydroxylé tels que l'acide malique, l'acide citrique, l'acide tartrique ou leurs esters, de préférence du glycérol ou de l'acide citrique, et/ou
c) les résines organiques à base de polyacide lactique ou de dérivés de polyacide lactique tels que les esters correspondants, et
- un granulat comprenant des granulats fins de granulométrie comprise entre 0 et 80 µm et des gros granulats choisis parmi le sable, les gravillons et/ou les graves.

2. Procédé de réalisation selon la revendication 1 **caractérisée en ce que** le liant comprend en outre une résine organique d) obtenue par réaction de glycérol, de triglycérides et d'au moins un diacide tel que l'acide maléique, l'acide phtalique, l'acide iso et téréphtalique, l'acide succinique, l'acide fumarique, l'acide adipique, l'acide subérique, l'acide sébacique, l'acide azélaïque ou un ester ou anhydride correspondant.

3. Procédé de réalisation selon l'une quelconque des revendications précédentes **caractérisée en ce que** le liant comprend un mélange de résines a) et b).

4. Procédé de réalisation selon l'une quelconque des revendications précédentes **caractérisée en ce que** le liant comprend un mélange de résines c) et d).

5. Procédé de réalisation selon l'une quelconque des revendications précédentes **caractérisée en ce que** lorsque le liant comprend la résine c), la résine c) représente en poids par rapport au poids total de résine dans le liant, 10 à 90% en poids, de préférence 10 à 40% en poids et mieux encore environ 20% en poids.

6. Procédé de réalisation selon l'une quelconque des revendications précédentes, **caractérisée en ce que** le revêtement de construction est mis en place *in situ* de manière à former des couches continues.

7. Matériau pour la réalisation de couches et/ou revêtements de construction, **caractérisé en ce qu'**il comprend un mélange :
- d'un granulat comprenant des granulats fins de granulométrie comprise entre 0 et 80 µm et des gros granulats choisis parmi le sable, les gravillons et/ou les graves; et
- d'un liant tel qu'utilisé selon l'une quelconque des revendications précédentes.

8. Matériau selon la revendication 7, **caractérisé en ce qu'**il comprend en poids par rapport au poids total dudit matériau:
- 85 à 97 % de granulat ; et
- 3% à 15 % de liant.

9. Matériau selon l'une quelconque des revendications 7 à 8, **caractérisé en ce que** le matériau est un enrobé.

10. Couche ou revêtement de construction continue susceptible d'être obtenu(e) *in situ* par application d'un mélange de liant et de granulats tels que définis dans les revendications 1 à 5 sur la chaussée ou par répandage sur la chaussée dudit liant avant ou après le répandage des granulats.

11. Couche ou revêtement de construction selon la revendication 10 **caractérisé en ce qu'**elle est extérieure.

12. Couche ou revêtement de construction selon la revendication 10 ou 11, **caractérisé en ce qu'**elle est continue.

13. Produit de marquage routier **caractérisé en ce qu'**il comprend :
- 10 à 50 % d'un liant tel que utilisé selon l'une quelconque des revendications 1 à 5,
- 1 à 40 % de pigments, et
- 20 à 60 % de charges.

14. Produit d'étanchéité tel qu'une membrane et/ou géomembrane **caractérisé en ce qu'**il comprend un textile imprégné d'un milieu liant comprenant :
- le liant tel qu'utilisé selon l'une quelconque des revendications 1 à 5,
- des charges de type filler calcaire.

## Patentansprüche

1. Verfahren zur Herstellung eines Belags für das Baugewerbe, von Markierungsprodukten und Abdichtungsprodukten, wobei Folgendes verwendet wird:
- ein Bindemittel, das mindestens ein Harz auf Basis polymerisierter Hydroxysäurederivate als nichtbituminöses Bindemittel umfasst, **dadurch gekennzeichnet, dass** das oder die Harz(e) aus den folgenden ausgewählt sind:
a) den organischen Harzen, die sich von einem Öl oder einem Fett natürlicher Herkunft ableiten, welches Monoglyceride und/oder Diglyceride umfasst, die mit einer Poly(hydroxysäure) gemäß der folgenden Formel verestert sind: 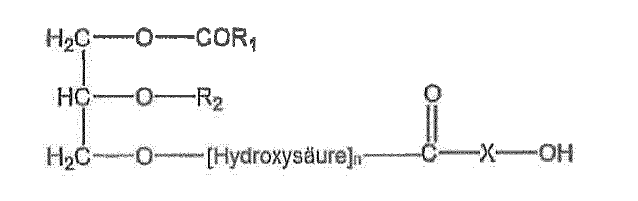 wobei
- R₁ eine aliphatische Kohlenwasserstoffkette ist, die 6 bis 32 Kohlenstoffatome aufweist, gesättigt oder ungesättigt ist, wobei sie möglicherweise mit Alkyl- oder Hydroxygruppen substituiert ist,
- R₂ ein Wasserstoffatom, eine -COR₄-Gruppe, wobei R₄ der Begriffsbestimmung für R₁ entspricht, oder eine veresterte Poly(hydroxysäure)-Gruppe ist,
- es sich bei der Poly(hydroxysäure)-Gruppe, die [Hydroxysäure]ₙ-CO-X-OH entspricht, um eine lineare oder verweigte kette handelt, die durch Kondensation von Monomeren ähnlicher oder verschiedenartiger Hydroxysäuremonomere erhalten wurde,
- in Abhängigkeit von der Beschaffenheit der Hydroxysäure, X = -CH₂, -CHR ist, wobei R eine Alkylgruppe mit 1 bis 5 Kohlenstoffatomen ist, welche 0 bis 5 funktionelle Hydroxygruppen aufweist,
- n für die Anzahl identischer oder verschiedenartiger Hydroxysäurebausteine steht und im Bereich von 3 bis 2000 liegt, und/oder
b) den organischen Harzen, die Estern von Polymilchsäure und Polyol wie etwa Glycerin, 1,2- und 1,3-Propandiol und/oder von mono- oder polyhydroxylierten Polysäuren wie etwa Äpfelsäure, Citronensäure, Weinsäure oder deren Estern entsprechen, vorzugsweise von Glycerin oder Zitronensäure, und/oder
c) den organischen Harzen auf Basis von Polymilchsäure oder von Polymilchsäurederivaten wie etwa den entsprechenden Estern, und
- eine Gesteinskörnung, die feine Gesteinskörnungen mit einer Korngröße im Bereich von 0 bis 80 µm und grobe Gesteinskörnungen, die aus Sand, Splitt und/oder Kies ausgewählt sind, umfasst.

2. Herstellungsverfahren nach Anspruch 1, **dadurch gekennzeichnet, dass** das Bindemittel darüber hinaus ein organisches Harz d) umfasst, das durch Umsetzung von Glycerin, von Triglyceriden und von mindestens einer Dicarbonsäure wie etwa Maleinsäure, Phthalsäure, Iso- und Terephthalsäure, Bernsteinsäure, Fumarsäure, Adipinsäure, Korksäure, Sebacinsäure, Azelainsäure oder einem entsprechenden Ester oder Anhydrid erhalten wurde.

3. Herstellungsverfahren nach einem beliebigen der vorhergehenden Ansprüche, **dadurch gekennzeichnet, dass** das Bindemittel eine Mischung der Harze a) und b) umfasst.

4. Herstellungsverfahren nach einem beliebigen der vorhergehenden Ansprüche, **dadurch gekennzeichnet, dass** das Bindemittel eine Mischung der Harze c) und d) umfasst.

5. Herstellungsverfahren nach einem beliebigen der vorhergehenden Ansprüche, **dadurch gekennzeichnet, dass** das Harz c) gewichtsmäßig 10 bis 90 Gewichts-%, vorzugsweise 10 bis 40 Gewichts-% und besser noch ungefähr 20 Gewichts-% am Gesamtharzgewicht im Bindemittel ausmacht, sofern das Harz c) im Bindemittel enthalten ist.

6. Herstellungsverfahren nach einem beliebigen der vorhergehenden Ansprüche, **dadurch gekennzeichnet, dass** der Belag für das Baugewerbe derart in situ aufgebracht wird, dass er durchgehende Schichten bildet.

7. Material zur Herstellung von Schichten und/oder Belägen für das Baugewerbe, **dadurch gekennzeichnet, dass** es eine Mischung aus Folgendem umfasst:
- einer Gesteinskörnung, die feine Gesteinskörnungen mit einer Korngröße im Bereich von 0 bis 80 µm und grobe Gesteinskörnungen, die aus Sand, Splitt und/oder Kies ausgewählt sind, umfasst; und
- einem Bindemittel wie es nach einem beliebigen der vorhergehenden Ansprüche verwendet wird.

8. Material nach Anspruch 7, **dadurch gekennzeichnet, dass** es gewichtsmäßig unter Bezugnahme auf das Gesamtgewicht des Materials Folgendes umfasst:
- 85 bis 97 % an Gesteinskörnung; und
- 3 % bis 15 % an Bindemittel.

9. Material nach einem beliebigen der Ansprüche 7 bis 8, **dadurch gekennzeichnet, dass** es sich bei dem Material um ein Asphaltmischgut handelt.

10. Durchgehende Schicht oder Belag für das Baugewerbe, wobei diese(r) *in situ* erhalten werden kann, indem eine Mischung aus Bindemittel und aus Gesteinskörnungen gemäß den Begriffsbestimmungen in den Ansprüchen 1 bis 5 auf die Fahrbahn aufgebracht wird oder indem das Bindemittel nach dem Ausbringen der Gesteinskörnungen auf der Fahrbahn ausgebracht wird.

11. Schicht oder Belag für das Baugewerbe nach Anspruch 10, **dadurch gekennzeichnet, dass** sie außenliegend ist.

12. Schicht oder Belag für das Baugewerbe nach Anspruch 10 oder 11, **dadurch gekennzeichnet, dass** sie durchgehend ist.

13. Straßenmarkierungsprodukt, **dadurch gekennzeichnet, dass** es Folgendes umfasst:
- 10 bis 50 % eines Bindemittels wie es nach einem beliebigen der Ansprüche 1 bis 5 verwendet wird,
- 1 bis 40 % an Pigmenten, und
- 20 bis 60 % an Füllstoffen.

14. Abdichtungsprodukt wie etwa eine Membran und/oder Dichtungsbahn, **dadurch gekennzeichnet, dass** sie einen Textilstoff umfasst, welcher mit einem bindend wirkenden Medium durchtränkt ist, das Folgendes umfasst:
- das Bindemittel wie es nach einem beliebigen der Ansprüche 1 bis 5 verwendet wird,
- Füllstoffe des Typs kalkbasierter Füller.

## Claims

1. A method for making coatings, marking products and/or sealing products, in which are used:
- a binder comprising at least one resin based on polymerized hydroxyacid derivatives as a non bituminous binder, **characterized in that** the resin(s) being selected from:
a) organic resins derived from an oil or a fat having a natural origin comprising monoglycerides and/or diglycerides, esterified with a poly(hydroxy acid) of following formula: 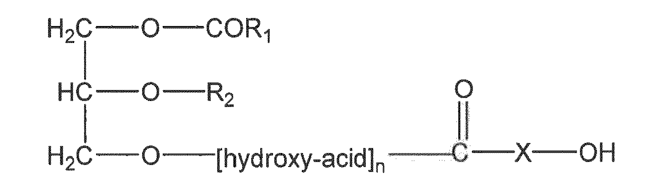 wherein,
- R₁ is a saturated or unsaturated, aliphatic hydrocarbon chain comprising from 6 to 32 carbon atoms, optionally substituted with alkyl or hydroxyl groups,
- R₂ is a hydrogen atom, a -COR₄ group, where R₄ has the same definition as R₁ or a poly(hydroxy acid) esterified group,
- the poly(hydroxy acid) group corresponding to [hydroxy acid]ₙ-CO-X-OH is a linear or a branched chain, obtained by condensating hydroxy acid monomers that are the same or different,
- depending on the nature of the hydroxy acid, X = -CH₂, -CHR, where R is an alkyl group having from 1 to 5 carbon atom(s) and comprising from 0 to 5 hydroxyl function(s),
- n is the number of hydroxy acid units that are the same or different and ranges from 3 to 2000, and/or
b) organic resins corresponding to lactic polyacid and polyol esters such as glycerol, 1,2- and 1,3-propane diol, and/or lactic polyacid and mono- or polyhydroxylated polyacid, such as malic acid, citric acid, tartaric acid, or esters thereof, preferably glycerol or citric acid esters, and/or
c) organic resins based on lactic polyacid or lactic polyacid derivatives such as corresponding esters thereof, and
- an aggregate comprising fine aggregates having a grain size distribution ranging between 0 and 80 µm and coarser aggregates selected among: sand, chipping and/or coarse aggregate.

2. The method according to claim 1, wherein the binder further comprises an organic resin d) obtained by reacting glycerol, triglycerides and at least one diacid such as maleic acid, phthalic acid, iso- and terephthalic acid, succinic acid, fumaric acid, adipic acid, suberic acid, sebacic acid, azelaic acid or a corresponding ester or anhydride.

3. The method according to any one of the preceding claims, wherein the binder comprises a mixture of resins a) and b).

4. The method according to any one of the preceding claims, wherein the binder comprises a mixture of resins c) and d).

5. The method according to any one of the preceding claims wherein, the binder comprises the resin c) and said resin c) represents by weight as related to the binder's resin total weight, from 10 to 90% by weight, preferably from 10 to 40% by weight and even more preferably is about 20% by weight.

6. The method according to any one of the preceding claims, **characterized in that** the coating product is formed *in situ* so as to form continuous layers.

7. Material for making building layers and/or coatings, **characterized in that** it comprises a mixture of:
- an aggregate comprising fine aggregates having a grain size distribution ranging between 0 and 80 µm and coarser aggregates selected among: sand, chipping and/or coarse aggregate; and
- a binder such as used according to any one of the previous claims.

8. Material according to claim 7, **characterized in that** it comprises by weight based on the total weight of the material:
- 85% to 97 % of aggregate, and
- 3 to 15 % of binder.

9. Material according to any one of claims 7 to 8, **characterized in that** the material is a mix.

10. Continuous building layer or coating obtainable *in situ* by the application a mixture of a binder and aggregates such as define in claims 1 to 5 on the roadway or by spreading said binder on the roadway before or after spreading the aggregates.

11. Building layer or coating according to claim 10, **characterized in that** it is outdoor.

12. Building layer or coating according to any one of the preceding claims 10 and 11, **characterized in that** it is continuous.

13. Road marking product **characterized in that** it comprises:
- 10 to 50% of a binder such as defined according to any one of the claims 1 to 5,
- 1 to 40% of pigments, and
- 20 to 60% of fillers.

14. Sealing product such as a membrane, a geomembrane, **characterized in that** it comprises a binding medium-impregnated textile comprising:
- the binder such as defined according to any one of the claims 1 to 5,
- fillers such as limestone type fillers.
